# FASCICULE DE BREVET EUROPEEN

(11) **EP 2 373 460 B1**
(45) Date de publication et mention de la délivrance du brevet: **21.11.2012**
(21) Numéro de dépôt: 09801730.4
(22) Date de dépôt: 01.12.2009
(51) Int. Cl.: B25J 9/08, A63H 33/04

(54) **DISPOSITIF MOTORISE D'ASSEMBLAGE MODULAIRE**
MOTORISIERTE VORRICHTUNG MIT EINER MODULAREN ANORDNUNG
MOTORIZED DEVICE OF MODULAR ASSEMBLY

(30) Priorité: 03.12.2008 FR 0858223
(43) Date de publication de la demande: 12.10.2011
(73) Titulaire: Norman, Philip, 81190 Saint Christophe (FR)
(72) Inventeur: Norman, Philip, 81190 Saint Christophe (FR)
(74) Mandataire: Wise, Stephen James
(86) Numéro de dépôt international: PCT/FR2009/052352
(87) Numéro de publication internationale: WO 2010/063938

(56) Documents cités:
- EP-A- 1 287 869
- WO-A-99/01261
- WO-A-2008/093028
- DE-A1- 4 431 842
- JP-A- 62 282 886

## Description

### DOMAINE D'APPLICATION DE L'INVENTION

La présente invention a trait au domaine de la motorisation des structures modulaires telles celles constituant des configurations robotiques et notamment aux adaptations permettant d'associer dans ces structures modulaires les fonctions de mise en mouvement et de modularité dans les meilleures conditions.

### DESCRIPTION DE L'ART ANTÉRIEUR

Dans ce domaine, le document EP 1 287 869 décrit un dispositif d'assemblage modulaire motorisé selon le prémbule de la revendication 1. Ce système modulaire robotique est composé de modules robotiques qui comprennent un boîtier dans lequel sont placés un mécanisme de mise en mouvement et un actionneur connecté à un mécanisme de pivotement pour fournir un entraînement en mouvement de rotation. Un moyen de stockage d'énergie fournit la puissance à l'actionneur qui tourne, en réponse à des instructions fournies par une unité de contrôle connectée à l'actionneur. Un plateau de connexion forme une liaison entre au moins deux modules robotiques. Au moins un capteur de position s'assure du positionnement des modules connectés entre eux.

Le demandeur a constaté plusieurs inconvénients à ce système, parmi ceux-ci :
- une face de module accueillant un plateau de connexion tournant ne peut proposer de liaison statique,
- les connections sont toutes coaxiales à l'axe du plateau qui est mobile en rotation ou non,
- une connexion perpendiculaire audit axe nécessite la présence sur le boîtier d'un autre plateau de connexion disposé perpendiculairement,
- la liaison de plusieurs modules entre eux selon des axes différents aboutit à une structure complexe à encombrement particulièrement important.

Le document US 5850762 qui propose des modules robotiques comprenant un boîtier sensiblement cylindrique avec des plateaux de connexion, mobiles ou non, disposés à ses extrémités coaxialement à l'axe du cylindre ainsi que des plateaux de connexion disposés sur la périphérie du corps cylindrique perpendiculairement à l'axe du cylindre, présente également les inconvénients précités.

Un autre document US 4712184 propose des modules robotiques formés d'un boîtier sensiblement sphérique proposant des arbres de liaison, motorisés ou non, selon trois axes perpendiculaires. Si les modules sphériques, c'est à dire à encombrement constant quel que soit l'axe d'assemblage, permettent de simplifier la gestion de l'encombrement d'une structure adoptant de tels modules et si la présence d'un arbre de liaison sur trois axes perpendiculaires augmente les possibilités d'association et de mise en mouvement, un tel système ne propose pas de liaisons dynamiques ou statiques dans une position autre que l'une de celles définies par lesdits axes des arbres de liaison disposés sur trois axes perpendiculaires.

Il existe également dans l'art antérieur le document WO 2008/093028 qui décrit un jeu de construction constitué par une pluralité d'éléments différents coopérant entre eux à des fins d'assemblage, dont un des éléments dit élément connecteur adopte un corps de forme sensiblement cylindrique dont la surface cylindrique est préformée pour coopérer à des fins d'assemblage avec les bases préformées à cet effet d'autres éléments connecteurs, la surface cylindrique dudit élément connecteur comportant au moins une projection en saillie cylindrique radiale venant coopérer à des fins d'assemblage avec au moins une rainure de forme adaptée et ménagée dans chaque base des éléments connecteurs. Bien que les possibilités d'assemblage statique proposées par ce jeu dépassent celles proposées dans les structures robotisées décrites plus haut, la motorisation autre que celle coaxiale à l'axe du cylindre à des fins de mise en mouvement des liaisons n'est pas envisagée et se heurte à des problèmes de mise en oeuvre.

Néanmoins, une des caractéristiques du principe d'assemblage des éléments connecteurs de ce jeu, propose une unité volumique d'assemblage à savoir que les éléments connecteurs une fois assemblés présentent systématiquement le même écartement quelle que soit leur orientation dans l'assemblage.

### DESCRIPTION DE L'INVENTION

Partant de cet état de fait, le demandeur a mené des recherches visant à concevoir et à réaliser un module robotique obviant aux inconvénients précités. Ces recherches ont abouti à la conception d'un dispositif d'assemblage modulaire motorisé tel que défini dans la revendication 1.

Ce dispositif est particulièrement avantageux en ce qu'en proposant des plateaux formant saillie par rapport au corps central, il propose à un ou plusieurs éléments, de venir se fixer sur toute la périphérie desdits plateaux, c'est à dire sur 360 degrés par rapport à l'axe desdits plateaux. Cette possibilité n'enlève pas la possibilité de venir se fixer axialement auxdits plateaux en préformant lesdits plateaux de formes axiales en retrait ou en saillie ou bien de venir se fixer tangentiellement du fait que ces derniers sont préformés pour accueillir lesdites saillies radiales.

Un élément motorisé associe donc un large champ de possibilités de mise en mouvement à un large champ de possibilités de connexion.

Cet élément associé à d'autres éléments statiques ou motorisés reprenant le même écartement de plateaux va multiplier les possibilités d'assemblage sans les rendre complexes du fait du respect de l'écartement de base. Un tel élément va donc proposer de multiples assemblages pour un même moteur.

Selon un mode de réalisation préféré, cet écartement de plateau ainsi que les dimensions de cet élément sont prévus pour permettre sa coopération avec les éléments connecteurs statiques du document WO 2008/093028.

Sur la base de cette première caractéristique, le demandeur a imaginé un premier mode de réalisation de l'élément motorisé, dit connecteur à motorisation axiale, qui présente un corps central adoptant une forme sensiblement cylindrique de diamètre inférieur à celui présenté par les saillies annulaires radiales desdits plateaux, et qui accueille un tronçon indépendant mobile constituant un anneau motorisé dont la rotation par rapport au reste dudit corps central est assumée par ledit moteur et par ledit module de transmission. Dans ce mode de réalisation, une portion cylindrique du corps central est mobile et motorisée par rapport aux plateaux. Ce mode de réalisation où une portion du corps central est motorisée est particulièrement avantageux en ce qu'il propose un anneau motorisé central sans que les plateaux de connexion qui forment des saillies annulaires radiales de part et d'autre dudit corps n'empêchent le mouvement. Ce premier mode de réalisation permet donc, conformément aux objectifs de l'invention, d'associer des capacités de motorisation matérialisées par l'anneau motorisé et des capacités de connexion statique matérialisées ici par les saillies radiales.

Bien entendu et cela apparaîtra mieux à la lecture de la description appuyée sur les dessins, d'autres possibilités de connexion et notamment au moins celles proposées dans le document WO 2008/093028 pourront être associées à ce premier mode de réalisation.

Toujours sur la base de cette première caractéristique, le demandeur a imaginé un autre mode de réalisation de l'élément motorisé dit connecteur à motorisation transversale qui présente un corps central, constitué par un palier fixe de guidage en rotation des deux plateaux, prolongeant un corps sensiblement cylindrique d'axe perpendiculaire à l'axe de rotation des plateaux et préformé d'au moins une projection en saillie cylindrique radiale de diamètre égal à celui des plateaux, la base dudit corps cylindrique non occupée par le palier étant préformée d'au moins une rainure de forme adaptée pour recevoir ledit plateau ou ladite projection radiale , et ménagée dans chaque base des éléments connecteurs.

Ainsi, cet élément reproduit en encombrement et en disposition, un assemblage perpendiculaire de deux éléments connecteurs de l'art antérieur entre eux en offrant de plus la motorisation d'une paire de plateaux.

Une caractéristique commune aux différents modes de réalisation de connecteurs motorisés concerne le fait que l'écartement axial entre les plateaux de connexion est le même sur tous les connecteurs et dans la mesure du possible sur tous les assemblages entre les différentes éléments constituant le dispositif. De plus, l'écartement respecté entre deux paires de plateaux assemblées axialement ou perpendiculairement respecte également l'écartement interplateaux dudit élément. Cette caractéristique permet de garantir une unité volumique dans les assemblages, motorisés ou non, proposés par le dispositif en les simplifiant grandement conformément aux objectifs de l'invention.

Selon une autre caractéristique particulièrement avantageuse de l'invention, chaque boîtier contient une carte électronique avec micro contrôleur asservissant le moteur.

Selon un autre objet de l'invention, le dispositif se décline dans un ensemble d'éléments d'échelles différentes. En effet, en respectant les proportions et les principes de montage, il est possible de créer des dispositifs d'assemblage modulaire d'échelles différentes reprenant les formes et les fonctions des éléments mais à des tailles différentes. De plus, des éléments appartenant à une échelle donnée peuvent dans certaines configuration coopérer avec des éléments appartenant à une autre échelle.

Ces modes de réalisation sont complétés, associés ou non, par les caractéristiques suivantes :
- un organe de transmission vient s'associer extérieurement audit anneau motorisé du connecteur à motorisation axiale pour transmettre le mouvement de rotation dudit anneau à un autre élément autour desdits plateaux selon l'axe dudit corps central,
- ledit organe de transmission est constitué par un anneau ouvert dont l'élasticité permet sa fixation par clipsage sur l'anneau motorisé et dont la surface extérieure est préformée d'une saillie formant une zone de liaison,
- ledit anneau est préformé extérieurement de cannelures avec lesquelles viennent coopérer à des fins de transmission du mouvement en rotation des cannelures préformées dans la surface intérieure dudit anneau ouvert constituant l'organe de transmission,
- ledit anneau reçoit directement un autre élément constitutif du dispositif à des fins d'entraînement en rotation de ce dernier,
- les faces extérieures desdits plateaux de connexion sont préformées d'au moins une rainure de forme adaptée pour recevoir par emboîtement tangentiel la tranche dudit plateau ou de ladite projection radiale, et ménagée dans chaque base des éléments connecteurs,
- les bases des corps cylindriques ainsi que les parties centrales desdits plateaux sont préformées pour accueillir un adaptateur axial permettant de réaliser la liaison axiale entre différents éléments,
- le dispositif comporte des éléments de maintien en position venant se lier aux différents éléments s'emboîtant,
- ces éléments de liaison assurent le maintien en position par clipsage,
- le moyen de maintien en position est constitué par un clip préformé pour coopérer avec des entailles ménagées à intervalles angulaires réguliers dans la périphérie des plateaux ou dans les saillies annulaires radiales,
- le boîtier dudit connecteur à motorisation transversale est constitué par deux demi-coques identiques,
- le boîtier dudit connecteur à motorisation axiale propose un moyen de transmission du mouvement de rotation débouchant axialement d'au moins un des plateaux,
- le corps cylindrique des éléments est ménagé d'une pluralité orifices perpendiculaires à l'axe de l'élément et dans lesquels vient s'introduire une ou plusieurs goupilles afin de maintenir en position la liaison axiale créée par un adaptateur axial.
- ladite goupille forme une projection cylindrique perpendiculaire à l'axe de l'élément et coopère avec les saillies radiales dont est préformé l'adaptateur afin de créer une butée mécanique axiale.
- dans le cadre d'un assemblage orthogonal, un clip de maintien en position est préformé d'une part d'une forme en saillie adoptant la courbe d'une rainure annulaire préformée dans le plateau d'un des éléments dont il assure le maintien en position et d'autre part d'une projection cylindrique formant goupille qui pénètre dans un des orifices dont est préformé perpendiculairement à son axe le corps cylindrique du deuxième élément dont il assure le maintien en position.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'un dispositif conforme à l'invention.

### BRÈVE DESCRIPTION DES DESSINS

La figure 1 est une vue en perspective des possibilités d'assemblages du premier mode de réalisation,
La figure 2 est une vue en perspective d'une autre possibilité d'assemblage,
La figure 3 est une vue en perspective d'un deuxième mode de réalisation,
La figure 4 est une vue en perspective éclatée illustrant un assemblage non motorisé perpendiculaire entre un élément et la face extérieure d'un des plateaux du premier mode de réalisation de connecteur motorisé,
La figure 5 est une vue en perspective éclatée illustrant un assemblage axial, motorisé ou non, au moyen d'un adaptateur entre un élément et la face extérieure d'un des plateaux du premier mode de réalisation de connecteur motorisé,
Les figures 6 et 7 sont des vues en perspective illustrant le montage d'un moyen de maintien en position pour un assemblage perpendiculaire,
Les figures 8 et 9 sont des vues en perspective illustrant le montage d'un moyen de maintien en position pour un assemblage axial,
La figure 10 est une vue en perpective éclatée le mode de réalisation d'un connecteur à axe transversal motorisé,
La figure 11 est une vue en perpective d'un assemblage réunissant d'éléments motorisés appartenant à des échelles différentes,
La figure 12 est une vue en perspective de deux modes de réalisation d'un adaptateur axial,
La figure 13 est une vue en perpective d'un assemblage orthogonal et axial,
La figure 14 est une vue en perspective d'une liaison axiale entre un élément et un adaptateur,
La figure 15 est une vue en perspective d'un mode de réalisation d'une goupille,
La figure 16 est une vue en perspective d'un assemblage orthogonal,
La figure 17 est une vue en perpective d'un mode de réalisation d'un clip de maintien en position.

### DESCRIPTION DES MODES DE RÉALISATION PRÉFÉRÉS

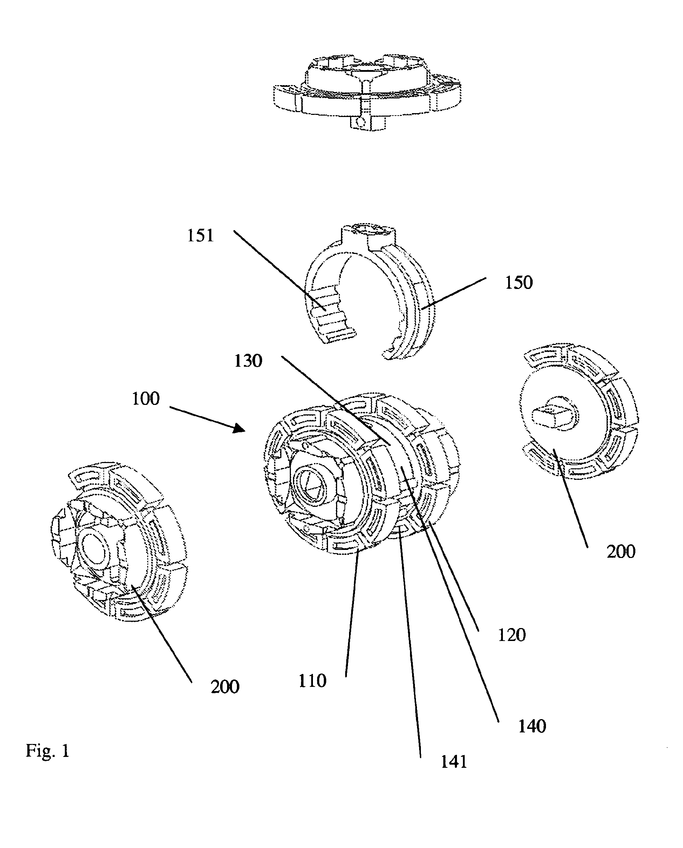

Tel qu'illustré sur le dessin de la figure 1, le premier mode de réalisation de connecteur motorisé est référencé 100 est constitué par un boîtier qui adoptant une forme sensiblement cylindrique comprend deux plateaux de connexion 110 et 120 qui,
sont disposés coaxiaux et en vis à vis de part et d'autre d'un corps central 130,
et sont préformés de façon à constituer deux saillies radiales annulaires par rapport audit corps central 130, sont montés fixes en rotation relativement à une partie intérieure dudit corps central, celui-ci adoptant une portion extérieure sous forme d'anneau motorisé 140 tournante par rapport auxdits plateaux 110 et 120.

Comme illustrées, les faces extérieures desdits plateaux 110 et 120 sont préformées de rainures 111 et 121 permettant d'accueillir par emboîtement à des fins d'assemblage les deux saillies radiales 110 et 120 d'un autre élément. Selon le mode de réalisation préféré illustré, les faces externes desdits plateaux adoptent deux paires de rainures 111 et 121 disposées perpendiculairement et adoptant l'écartement des deux saillies radiales constituées par les plateaux 110 et 120.

Le mouvement de l'anneau motorisé 140 par rapport au reste du boîtier est commandé par un moteur et par un module de transmission non illustrés contenus dans ledit boîtier.

Ce moyen de mise en mouvement peut également être exploité pour permettre d'offrir un axe creux (ou non) motorisé dans l'axe des deux bases du cylindre sur une ou deux des desdites bases. Des éléments d'assemblage 200 peuvent alors, comme illustrés, venir se fixer axialement pour une liaison fixe ou une transmission de mouvement.

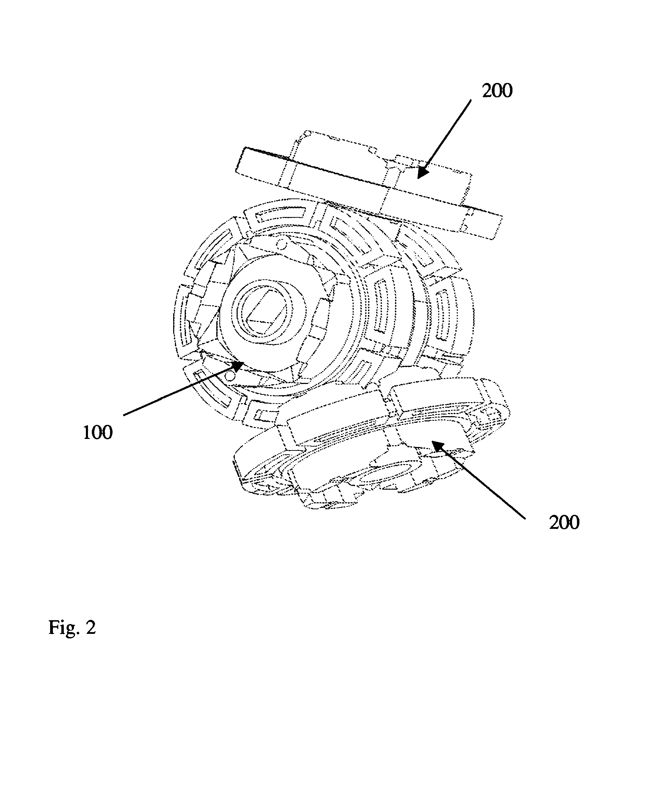

La transmission du mouvement de l'anneau motorisé à un autre élément a fait l'objet d'une étude permettant d'obtenir l'adéquation entre l'encombrement limité disponible et les possibilités d'assemblage fixe et mobile qui doivent être conservées. En effet, conformément à l'effet technique recherché, ce connecteur motorisé autorise à la fois un entraînement autour de l'axe de cylindre au moyen de l'anneau motorisé mais également une fixation sur l'ensemble de la périphérie au moyen des saillies radiales constituées par la périphérie des plateaux. La figure 2 illustre à la fois une liaison fixe par emboîtement et une liaison de transmission de mouvement entre le connecteur motorisé 100 et des éléments d'assemblage venant s'associer perpendiculairement à l'axe dudit connecteur.

La transmission du mouvement de l'anneau motorisé 140 à un autre élément est réalisée par l'intermédiaire d'un organe de transmission 150 qui vient s'associer extérieurement audit anneau motorisé 140 pour transmettre le mouvement de rotation dudit anneau autour desdits plateaux selon l'axe dudit corps central. Cet organe de transmission 150 est constitué par un anneau ouvert dont l'élasticité permet sa fixation par clipsage sur l'anneau motorisé 140 et dont la surface extérieure est préformée d'une zone d'accueil pour d'autres éléments. La zone d'accueil et la liaison sont mises en oeuvre de façon à ce que l'élément entraîné au moyen de l'organe de liaison puisse tourner sans contact avec les rebords des plateaux. De même, la présence de l'organe de liaison n'empêche pas l'assemblage fixe sur les saillies annulaires radiales.

Selon le mode de réalisation illustré, ledit anneau 140 est préformé extérieurement de cannelures 141 avec lesquelles viennent coopérer à des fins de transmission du mouvement en rotation, des cannelures 151 préformées dans la surface intérieure dudit anneau ouvert 150 constituant l'organe de transmission.

Selon un mode de réalisation non illustré, ledit anneau reçoit directement un autre élément constitutif du dispositif à des fins d'entraînement en rotation de ce dernier. Ainsi, il n'est plus nécessaire de disposer d'un organe de transmission. Le choix entre les deux solutions d'entraînement se base sur la taille et la rigidité des éléments participant à cette liaison.

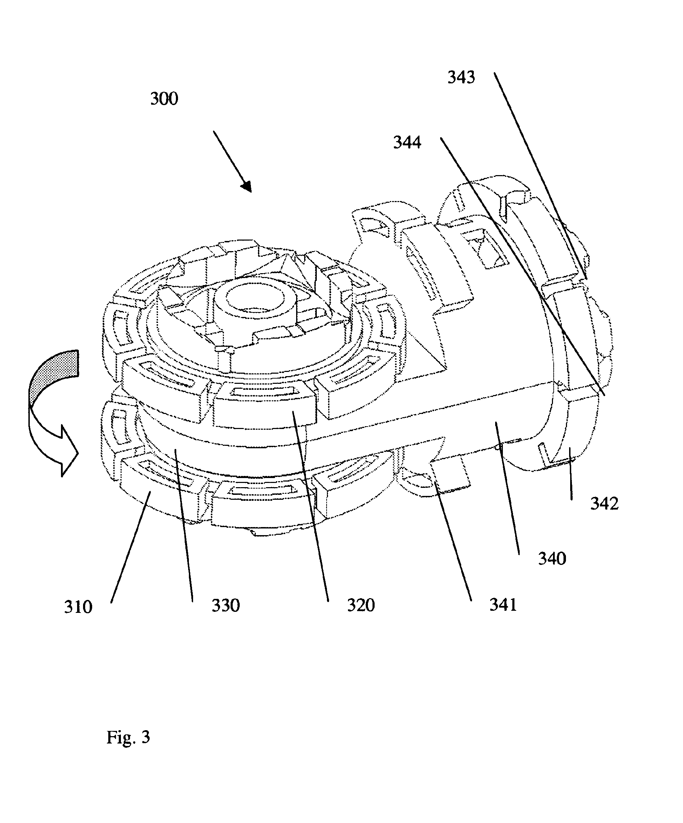

La figure 3 illustre un autre mode de réalisation d'un connecteur motorisé 300 où le corps central est fixe et où ce sont les plateaux 310 et 320 qui tournent. De plus, ce palier 330 forme le prolongement d'un boîtier et est issu d'un corps 340 de forme sensiblement cylindrique d'axe perpendiculaire à l'axe de rotation des plateaux 310 et 320.

Ce corps 340 est préformé d'au moins une (ici deux) projections 341 et 342 en saillie cylindrique radiale de diamètre et d'écartement égaux à ceux des plateaux, la base dudit corps cylindrique non occupée par le palier étant préformée d'au moins une rainure 343 et 344 de forme adaptée pour recevoir ledit plateau ou ladite projection radiale et ménagée, dans chaque base, desdits éléments connecteurs.

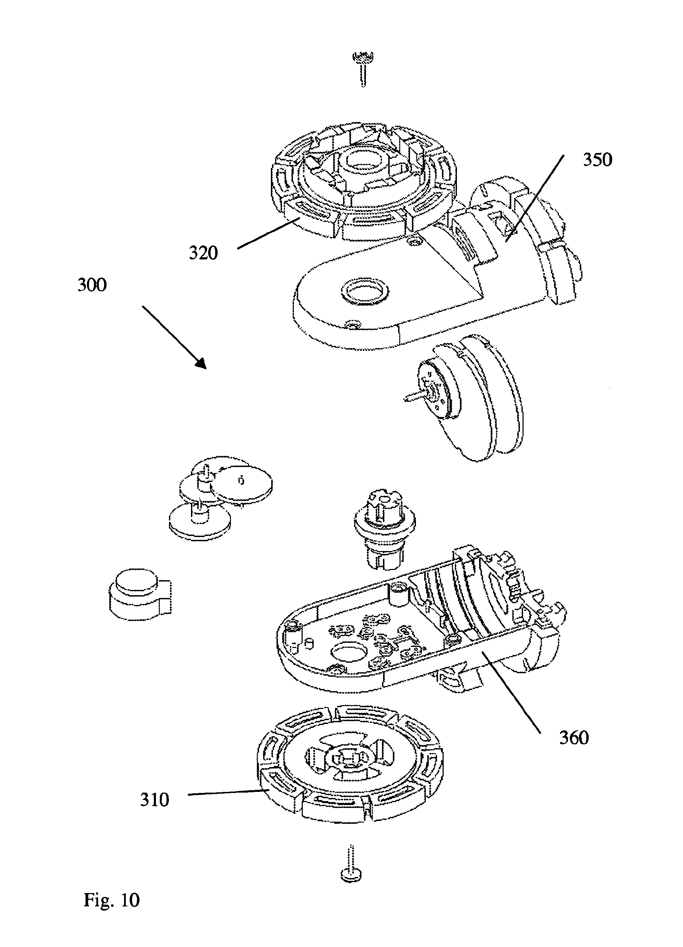

Comme illustrés sur le dessin de la figure 10, le boîtier réunissant le palier 330 et le corps cylindrique 340 du deuxième mode de réalisation de connecteur motorisé 300 se décompose en deux demi coques symétriques 350 et 360. Ces deux demi coques forment, une fois assemblées, un volume d'accueil permettant de recevoir les modules fonctionnels nécessaires à l'entraînement en mouvement ainsi qu'à la gestion de cet entraînement. Selon le mode de réalisation illustré, le boîtier contient les éléments suivants :
- deux cartes électroniques,
- un moteur,
- des engrenages,
- un axe de sortie,
- et un potentiomètre.
Des vis viennent solidariser les plateaux 310 et 320 à l'arbre de sortie.

Selon un autre mode de réalisation, le volume intérieur formé par le boîtier accueille en outre une source d'énergie. Cette caractéristique peut s'appliquer aussi bien au mode de réalisation d'un connecteur à motorisation transversale qu'à un mode de réalisation d'un connecteur à motorisation axiale.

Comme illustré, le volume du connecteur motorisé transversal correspond à celui d'un assemblage perpendiculaire de deux connecteurs non motorisés. Ainsi, conformément à l'invention, l'unité volumique des assemblage est respecté.

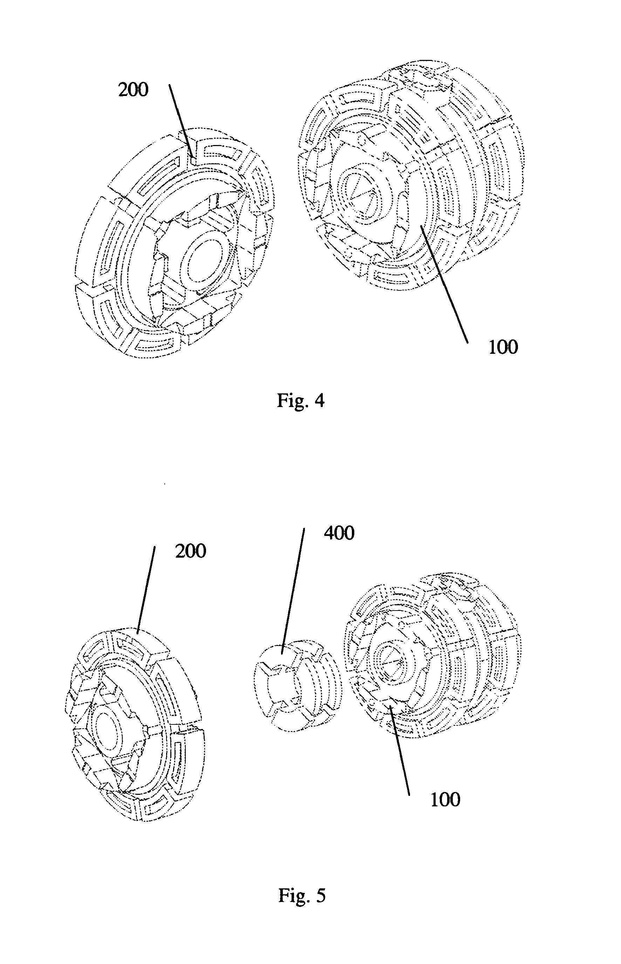

Comme illustrées, les faces extérieures desdits plateaux sont préformées d'au moins une rainure de forme adaptée pour recevoir par emboîtement la tranche dudit plateau ou de ladite projection radiale et ménagée dans chaque base des éléments connecteurs. Il en est de même avec les éléments d'assemblage 200. Cette possibilité de liaison perpendiculaire est illustrée par le dessin de la figure 4.

Comme illustrées, les bases des corps cylindriques ainsi que les parties centrales desdits plateaux sont préformées pour accueillir un adaptateur axial 400 permettant de réaliser la liaison axiale entre différents éléments telle celle apparaissant en figure 5. Cet adaptateur axial 400 est constitué par un corps sensiblement cylindrique traversé par un évidement cylindrique axial et comportant à ses bases une collerette 410. A des fins de liaison, cet évidement cylindrique accueille les projections cylindriques axiales issues des plateaux des connecteurs.

L'élément d'assemblage peut également être préformé pour ne pas nécessiter un adaptateur axial et comporter une saillie axiale permettant sa liaison avec une forme adaptée préformée dans les autres éléments.

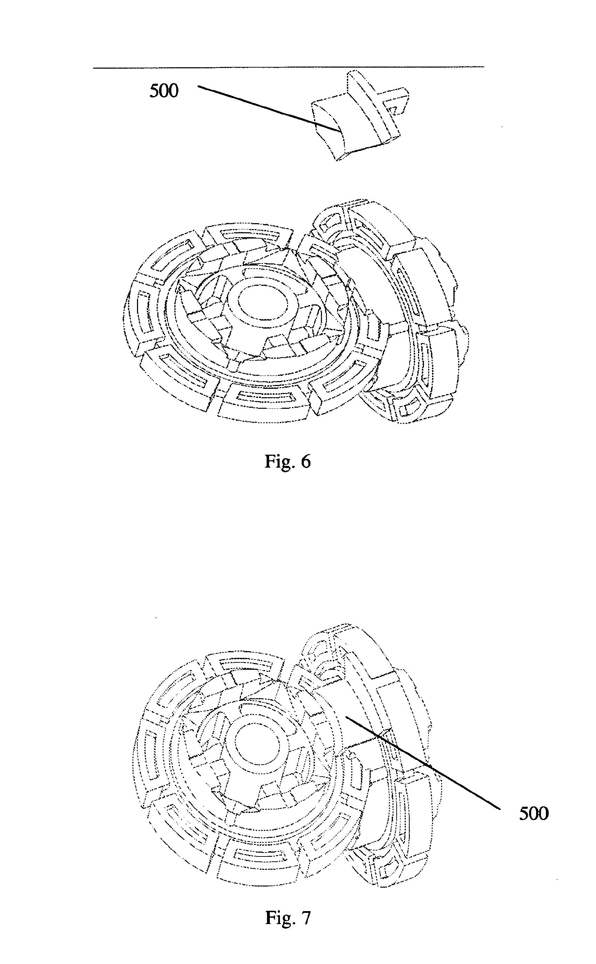

Afin de maintenir en position les éléments positionnés par emboîtement, le dispositif comporte une pluralité d'éléments de maintien en position venant se lier aux différents éléments s'emboîtant. Ces éléments de maintien en position sont constitués par des clips 500 qui, comme illustrés, sur le dessin des figures 6 et 7 viennent s'emboîter dans des volumes prévus à cet effet sur les deux éléments déjà assemblés perpendiculairement.

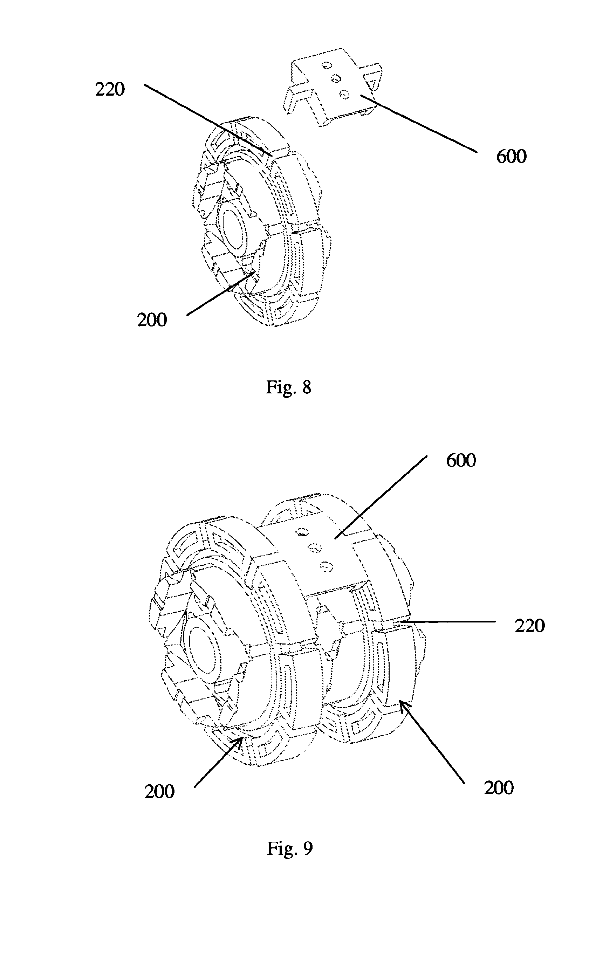

Les figures 8 et 9 présentent un autre mode de réalisation d'un clip 600 permettant le maintien en position sur les éléments déjà assemblés axialement. Comme illustrés, ce clip est préformé pour coopérer avec des entailles 220 pratiquées à intervalle angulaire régulier (ici 22,5 °) dans les saillies annulaires radiales ou dans la périphérie des éléments 200. Cette coopération permet l'inscription sans saillie du clip dans le volume cylindrique des éléments connecté.

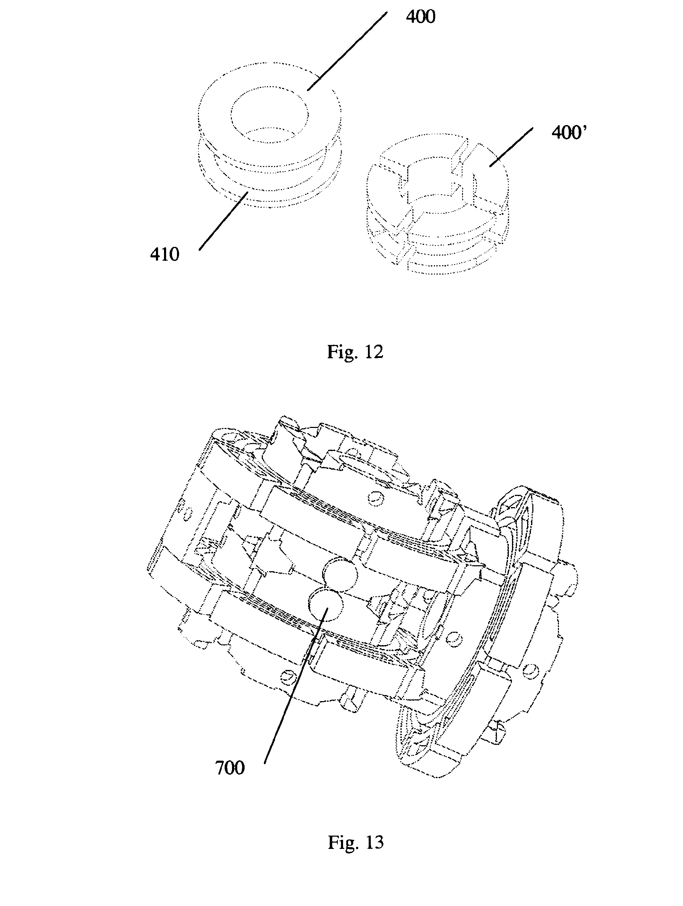

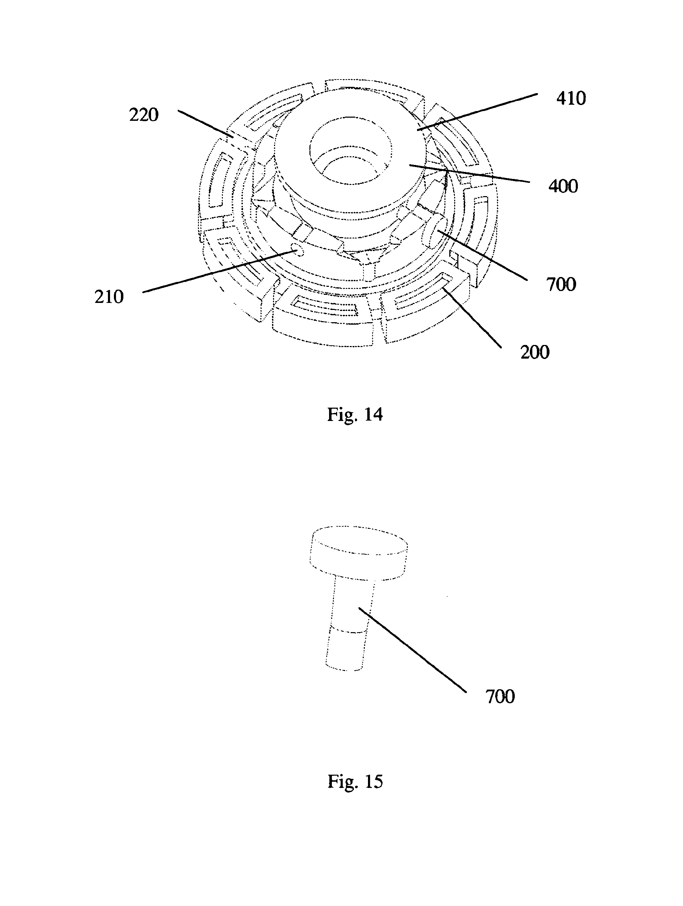

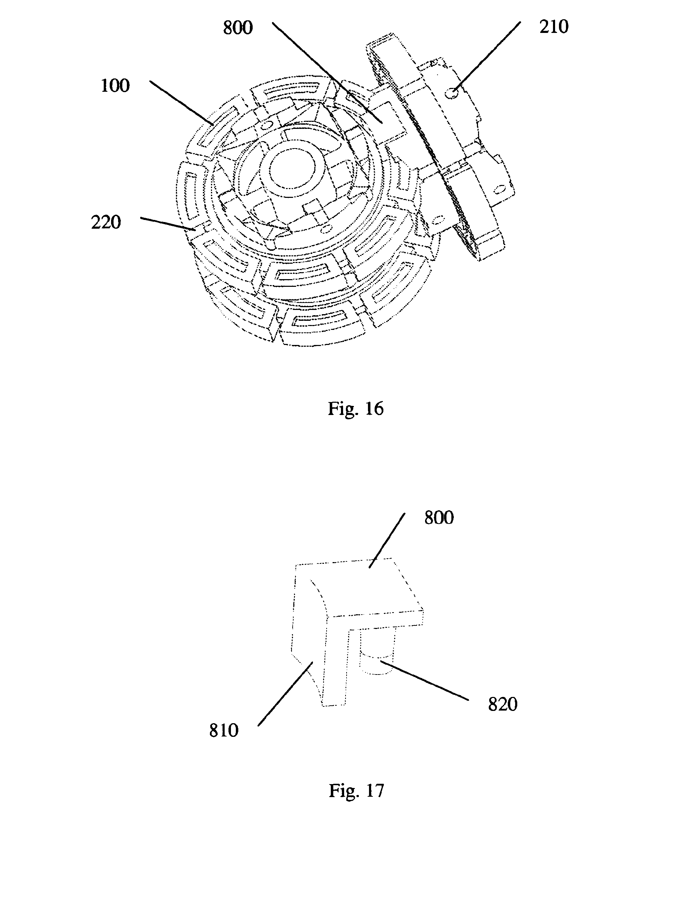

Les figures 12 à 17 illustrent d'autres caractéristiques de fixation entre éléments. Ces caractéristiques associent l'emboîtement pour la mise en position et le goupillage pour le maintien en position.

Ainsi, dans le cadre d'un assemblage axial illustré par les dessins des figures 12 à 15, le corps cylindrique des connecteurs 200 est ménagé d'une pluralité orifices 210 perpendiculaires à l'axe du connecteur et dans lesquels vient s'introduire une ou plusieurs goupilles 700 afin de maintenir en position la liaison axiale créée par l'adaptateur 400. Cette goupille 700 coopère avec les collerettes 410 dont est préformé l'adaptateur 400 afin de créer une butée mécanique axiale. Un autre mode de réalisation de l'adaptateur axial 400' où les collerettes adopte des entailles est également illustré.

Dans le cadre d'une assemblage orthogonal illustré par les dessins des figures 13 16 et 17, le clip de maintien en position 800 est préformé d'une part d'une forme en saillie 810 adoptant la courbe d'une rainure annulaire préformée dans le plateau d'un des connecteurs 100 dont il assure le maintien en position et d'autre part d'une projection cylindrique 820 formant goupille qui pénètre dans un des orifices dont est préformé perpendiculairement à son axe le corps cylindrique de l'élément connecteur 200.

Selon un mode de réalisation, l'évidement défini par la rainure annulaire préformée dans le plateau et celui défini par lesdites entailles communiquent afin de faciliter l'installation et la mise en oeuvre des clips.

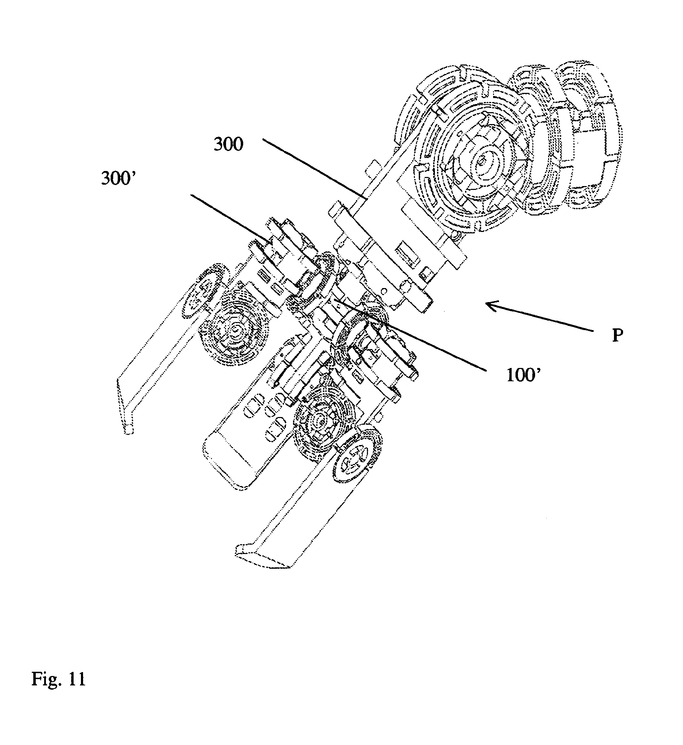

La figure 11 illustre un assemblage formant une configuration de préhenseur référencé P. Ce préhenseur comprend un connecteur motorisé transversal 300 auquel est associé axialement un connecteur motorisé axial 100' d'échelle inférieure qui sert de base de connexion à trois assemblages de connecteurs motorisés transversaux 300' de même échelle que celle du connecteur axial 100' disposés à 120° et assurant le déplacement des doigts du préhenseur P.

Différentes configurations et technologies de connectique sont exploitables pour le dispositif de l'invention.

On comprend que le dispositif, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention.

Ainsi par exemple, la rotation mise en oeuvre par les moteurs et les chaînes de transmission peut être réalisée sur 360 ° ou non et peut être pilotée par incrémentation.

Cette motorisation peut donc être proposée en continu (sur 360°) ou en incréments (mode servomoteur).

De plus, le matériau utilisé peut être notamment du plastique ou du métal et plus particulièrement du titane.

## Revendications

1. Dispositif d'assemblage modulaire motorisé constitué par une pluralité d'éléments, statiques et/ou motorisés, selon lequel l'un des éléments (100, 300) est constitué par un boîtier adoptant une forme générale cylindrique présentant
deux plateaux de connexion (110 et 120, 310 et 320) qui, disposés coaxiaux et en vis à vis de part et d'autre d'un corps central (130, 330),
lesdits plateaux étant liés audit corps central de façon à permettre un mouvement relatif en rotation selon l'axe des plateaux entre ledit corps central et lesdits plateaux,
le mouvement relatif de rotation entre les deux plateaux (110 et 120, 310 et 320) et le corps central (130, 330) étant motorisé et commandé par un moteur et par un module de transmission, contenus dans ledit boîtier,
**CARACTÉRISÉ PAR LE FAIT que** lesdits plateaux sont préformés de façon à constituer deux saillies radiales annulaires par rapport audit corps central .

2. Dispositif selon la revendication 1, **CARACTÉRISÉ PAR LE FAIT QU'** un des éléments dit connecteur à motorisation axiale (100), présente un corps central (130) adoptant une forme sensiblement cylindrique de diamètre inférieur à celui présenté par les saillies annulaires radiales desdits plateaux (110 et 120) et qui accueille un tronçon indépendant mobile constituant un anneau motorisé (140) dont la rotation par rapport à une partie intérieure audit anneau motorisé, sur laquelle lesdits plateaux sont montés fixes en rotation, est assumée par ledit moteur et par ledit module de transmission.

3. Dispositif selon la revendication 2, **CARACTÉRISÉ PAR LE FAIT QU'**un organe de transmission (150) vient s'associer extérieurement audit anneau motorisé (140) pour transmettre le mouvement de rotation dudit anneau autour desdits plateaux selon l'axe dudit corps central.

4. Dispositif selon la revendication 3, **CARACTÉRISÉ PAR LE FAIT QUE** ledit organe de transmission (150) est constitué par un anneau ouvert dont l'élasticité permet sa fixation par clipsage sur l'anneau motorisé (140) et dont la surface extérieure est préformée d'une saillie formant une zone de liaison.

5. Dispositif selon la revendication 4, **CARACTÉRISÉ PAR LE FAIT QUE** ledit anneau (140) est préformé extérieurement de cannelures (141) avec lesquelles viennent coopérer à des fins de transmission du mouvement en rotation des cannelures (151) préformées dans la surface intérieure dudit anneau ouvert (150) constituant l'organe de transmission.

6. Dispositif selon la revendication 2, **CARACTÉRISÉ EN CE QUE** ledit anneau (140) reçoit directement un autre élément constitutif du dispositif à des fins d'entraînement en rotation de ce dernier.

7. Dispositif selon la revendication 1, **CARACTÉRISÉ PAR LE FAIT QU'**un autre élément dit connecteur à motorisation transversale (300), présente un corps central (330) constitué par un palier fixe de guidage en rotation des deux plateaux (310 et 320) prolongeant un corps sensiblement cylindrique (340) d'axe perpendiculaire à l'axe de rotation des plateaux et préformé d'au moins une projection (341, 342) en saillie cylindrique radiale de diamètre égal à celui des plateaux, la base dudit corps cylindrique (340) non occupée par le palier étant préformée d'au moins une rainure de forme adaptée pour recevoir ledit plateau ou ladite projection radiale, et ménagée dans chaque base des éléments.

8. Dispositif selon les revendications 1, 2 et 7, **CARACTÉRISÉ PAR LE FAIT QUE** les faces extérieures desdits plateaux sont préformées d'au moins une rainure de forme adaptée pour recevoir par emboîtement la tranche dudit plateau ou de ladite projection radiale, et ménagée dans chaque base des éléments.

9. Dispositif selon les revendications 2 et 7, **CARACTÉRISÉ PAR LE FAIT QUE** les bases des corps cylindriques ainsi que les parties centrales desdits plateaux sont préformées pour accueillir un adaptateur axial (400) permettant de réaliser la liaison axiale entre différents éléments.

10. Dispositif selon la revendication 1, **CARACTÉRISÉ PAR LE FAIT QU'**il comporte des éléments de maintien en position venant se lier aux différents éléments s'emboîtant.

11. Dispositif selon la revendication 1, **CARACTÉRISÉ PAR LE FAIT QUE** l'écartement axial entre les plateaux de connexion est le même sur tous les connecteurs.

12. Dispositif selon la revendication 1, 2 et 7, **CARACTÉRISÉ PAR LE FAIT QUE** l'écartement respecté entre deux paires de plateaux assemblées axialement ou perpendiculairement respecte également l'écartement interplateaux dudit élément.

13. Dispositif selon la revendication 7, **CARACTÉRISÉ PAR LE FAIT que** le boîtier dudit connecteur à motorisation transversale (300) est constitué par deux demi-coques identiques (350 et 360).

14. Dispositif selon la revendication 2, **CARACTÉRISÉ PAR LE FAIT QUE** le boîtier dudit connecteur à motorisation axiale propose un moyen de transmission du mouvement de rotation débouchant axialement d'au moins un des plateaux.

15. Dispositif selon la revendication 1, **CARACTÉRISÉ PAR LE FAIT QUE** chaque boîtier contient une carte électronique avec micro contrôleur asservissant le moteur.

16. Dispositif selon les revendications 9 et 10, **CARACTÉRISÉ PAR LE FAIT QUE** le corps cylindrique des éléments est ménagé d'une pluralité d'orifices (210) perpendiculaires à l'axe du connecteur et dans lesquels vient s'introduire une ou plusieurs goupilles (700) afin de maintenir en position la liaison axiale créée par un adaptateur axial.

17. Dispositif selon la revendication 16, **CARACTÉRISÉ PAR LE FAIT QUE** ladite goupille (700) forme une projection cylindrique perpendiculaire à l'axe du connecteur et coopère avec les saillies radiales (410) dont est préformé l'adaptateur (400) afin de créer une butée mécanique axiale.

18. Dispositif selon la revendication 10, **CARACTÉRISÉ PAR LE FAIT QUE** dans le cadre d'un assemblage orthogonal un clip de maintien en position (800) est préformé d'une part d'une forme en saillie (810) adoptant la courbe d'une rainure annulaire préformée dans le plateau d'un des élément dont il assure le maintien en position et d'autre part d'une projection cylindrique (820) formant goupille qui pénètre dans un des orifices dont est préformé perpendiculairement à son axe le corps cylindrique du deuxième élément dont il assure le maintien en position.

19. Dispositif selon la revendication 10, **CARACTÉRISÉ PAR LE FAIT QUE** le moyen de maintien en position est constitué par un clip préformé pour coopérer avec des entailles (220) ménagées à intervalles angulaires réguliers dans la périphérie des plateaux ou dans les saillies annulaires radiales.

20. Dispositif selon les revendications 18 et 19, **CARACTÉRISÉ PAR LE FAIT QUE** l'évidement défini par la rainure annulaire préformée dans le plateau et celui défini par lesdites entailles communiquent afin de faciliter la mise en oeuvre des clips.

## Claims

1. Motorised modular assembly device comprising a plurality of static and/or motorised elements, according to which one of the elements (100, 300) comprises a casing having a generally cylindrical form with two connection platforms (110 and 120, 310 and 320), which are disposed coaxially and on either side of a central body (130, 330), the said platforms being so connected with the said central body as to permit a relative rotational movement about the axis of the platforms between the said central body and the said platforms, the relative rotational movement between the two platforms (110 and 120, 310 and 320) and the central body (130, 330) being motorised and controlled by a motor and by a transmission module both contained in said casing, **characterised in that** the said platforms are formed so as to form two annular radial projections with respect to the said central body.

2. Device according to claim 1, **characterised in that** one of the elements, termed axial motorisation connector (100), has a central body (130), which has a substantially cylindrical form with a diameter less than that of the annular radial projections of said platforms (110 and 120) and which incorporates an independently movable section comprising a motorised ring (140), the rotation of which in relation to an interior part of the said motorised ring, on which the said platforms are mounted to be secure against rotation, is effected by the said motor and by the said transmission module.

3. Device according to claim 2, **characterised in that** a transmission element (150) can be externally associated with the said motorised ring (140) in order to transmit the rotational movement of the said ring around the said platforms about the axis of the said central body.

4. Device according to claim 3, **characterised in that** the said transmission element (150) comprises an open ring, the resilience of which permits fixing thereof by clipping on the motorised ring (140) and the external surface of which is formed with a projection forming a connection zone.

5. Device according to claim 4, **characterised in that** the said ring (140) is formed on the exterior with grooves (141) with which grooves (151) formed in the interior surface of the said open ring (150) forming the transmission element are co-operable for the purpose of transmission of rotational movement.

6. Device according to claim 2, **characterised in that** the said ring (140) directly receives another constituent element of the device for the purpose of rotatably entraining the latter.

7. Device according to claim 1, **characterised in that** another element, termed transverse motorisation connector (300), has a central body (330) formed by a fixed bearing for rotational guidance of the two platforms (310 and 320) in prolongation of a substantially cylindrical body (340) with an axis perpendicular to the axis of rotation of the platforms and formed with at least one radial cylindrical projection (341, 342) having a diameter equal diameter to that of the platforms, the base of the said cylindrical body (340) not occupied by the bearing portion being formed with at least one groove having a form adapted to receive the said platform or the said radial projection, and arranged in each base of the elements.

8. Device according to claims 1, 2 and 7, **characterised in that** the exterior faces of said platforms are formed with at least one groove having a form adapted to receive by insertion a portion of the said platform or the said radial projection and arranged in each base of the elements.

9. Device according to claims 2 and 7, **characterised in that** the bases of the cylindrical bodies and the central parts of the said platforms are formed to receive an axial adapter (400) permitting axial interconnection of different elements.

10. Device according to claim 1, **characterised in that** it comprises elements for maintaining position which are connectible with different elements for assembly.

11. Device according to claim 1, **characterised in that** the axial spacing between the connection platforms is the same for all the connectors.

12. Device according to claim 1, 2, and 7, **characterised in that** the respective spacing between two pairs of platforms assembled axially or perpendicularly is respectively the same as the spacing between platforms of said element.

13. Device according to claim 7, **characterised in that** the casing of said transverse motorisation connector (300) is formed by two identical half shells (350 and 360).

14. Device according to claim 2, **characterised in that** the casing of said axial motorisation connector provides a means for transmission of the rotational movement axially deriving from at least one of the platforms.

15. Device according to claim 1, **characterised in that** each casing contains an electronic circuitboard with a microcontroller operating the motor.

16. Device according to claims 9 and 10, **characterised in that** the cylindrical body of the elements is arranged with a plurality of openings (210) perpendicular to the axis of the connector in which one or more pins (700) are insertable for the purpose of maintaining in position the axial connection created by an axial adapter.

17. Device according to claim 16, **characterised in that** said pin (700) forms a cylindrical projection perpendicular to the axis of the connector and co-operable with the radial projections (410) with which the adaptor (400) is formed for creating an axial mechanical abutment.

18. Device according to claim 10, **characterised in that** in the case of an orthogonal assembly a clip (800) for maintaining position is formed on the one hand with a shape of a projection (810) matching the curve of an annular groove formed in the platform of one element which it maintains in position and on the other hand with a cylindrical projection (820) forming a pin which penetrates one of the openings which is formed perpendicularly to the axis of the cylindrical body of the second element which it maintains in position.

19. Device according to claim 10, **characterised in that** the means for maintaining in position is formed a clip formed to co-operate with notches (220) arranged at regular angular intervals in the periphery of the platforms or in the radial annular projections.

20. Device according to claims 18 and 19, **characterised in that** the channel defined by the annular groove formed in the platform and that defined by the said notches communicate for the purpose of assisting manipulation of the clips.

## Patentansprüche

1. Motorisierte modulare Montagevorrichtung, die aus einer Vielzahl von statischen und/oder motorisierten Elementen besteht, gemäß der eines der Elemente (100, 300) aus einem Gehäuse mit allgemein zylindrischer Form besteht, das zwei Verbindungsplatten (110 und 120, 310 und 320) aufweist, die koaxial und einander gegenüber zu beiden Seiten eines zentralen Körpers (130, 330) angeordnet sind, wobei die Platten so mit dem zentralen Körper verbunden sind, dass sie eine relative Drehbewegung gemäß der Achse der Platten zwischen dem zentralen Körper und den Platten erlauben, wobei die relative Drehbewegung zwischen den zwei Platten (110 und 120, 310 und 320) und dem zentralen Körper (130, 330) motorisiert ist und von einem Motor und von einem Übertragungsmodul gesteuert wird, die in dem Gehäuse enthalten sind, **dadurch gekennzeichnet, dass** die Platten so vorgeformt sind, dass sie zwei radiale ringförmige Vorsprünge bezüglich des zentralen Körpers bilden.

2. Vorrichtung nach Anspruch 1, **dadurch gekennzeichnet, dass** eines der Elemente, Verbinder mit axialer Motorisierung (100) genannt, einen zentralen Körper (130) aufweist, der eine im Wesentlichen zylindrische Form mit einem geringeren Durchmesser als derjenige annimmt, den die radialen ringförmigen Vorsprünge der Platten (110 und 120) aufweisen, und der einen beweglichen unabhängigen Abschnitt aufnimmt, der einen motorisierten Ring (140) bildet, dessen Drehung bezüglich eines Teils innerhalb des motorisierten Rings, auf dem die Platten drehfest montiert sind, von dem Motor und dem Übertragungsmodul übernommen wird.

3. Vorrichtung nach Anspruch 2, **dadurch gekennzeichnet, dass** ein Übertragungsorgan (150) sich außen mit dem motorisierten Ring (140) vereint, um die Drehbewegung des Rings um die Platten gemäß der Achse des zentralen Körpers zu übertragen.

4. Vorrichtung nach Anspruch 3, **dadurch gekennzeichnet, dass** das Übertragungsorgan (150) aus einem offenen Ring besteht, dessen Elastizität seine Befestigung durch Einklinken am motorisierten Ring (140) erlaubt, und dessen Außenfläche mit einem Vorsprung vorgeformt ist, der eine Verbindungszone formt.

5. Vorrichtung nach Anspruch 4, **dadurch gekennzeichnet, dass** der Ring (140) außen mit Rillen (141) vorgeformt ist, mit denen zur Übertragung der Drehbewegung vorgeformte Rillen (151) in der Innenfläche des offenen Rings (150) zusammenwirken, der das Übertragungsorgan bildet.

6. Vorrichtung nach Anspruch 2, **dadurch gekennzeichnet, dass** der Ring (140) direkt ein weiteres zur Vorrichtung gehörendes Element für dessen Drehantrieb aufnimmt.

7. Vorrichtung nach Anspruch 1, **dadurch gekennzeichnet, dass** ein weiteres Element, Verbinder mit Quermotorisierung (300) genannt, einen zentralen Körper (330) aufweist, der aus einem ortsfesten Drehführungslager der zwei Platten (310 und 320) besteht, das einen im Wesentlichen zylindrischen Körper (340) verlängert, der eine Achse lotrecht zur Drehachse der Platten hat und mit mindestens einer radial zylindrisch vorstehenden Ausbuchtung (341, 342) mit einem Durchmesser gleich demjenigen der Platten vorgeformt ist, wobei die Basis des zylindrischen Körpers (340), die nicht von dem Lager eingenommen wird, mit mindestens einer Nut geeigneter Form vorgeformt ist, um die Platte oder die radiale Ausbuchtung aufzunehmen, und in jeder Basis der Elemente ausgearbeitet ist.

8. Vorrichtung nach den Ansprüchen 1, 2 und 7, **dadurch gekennzeichnet, dass** die Außenseiten der Platten mit mindestens einer Nut geeigneter Form vorgeformt sind, um durch Ineinanderfügen die Schmalseite der Platte oder der radialen Ausbuchtung aufzunehmen, und die in jeder Basis der Elemente ausgearbeitet ist.

9. Vorrichtung nach den Ansprüchen 2 und 7, **dadurch gekennzeichnet, dass** die Basen der zylindrischen Körper sowie die zentralen Bereiche der Platten vorgeformt sind, um einen axialen Adapter (400) aufzunehmen, der es ermöglicht, die axiale Verbindung zwischen verschiedenen Elementen zu realisieren.

10. Vorrichtung nach Anspruch 1, **dadurch gekennzeichnet, dass** sie Positionsbeibehaltungselemente aufweist, die sich mit den verschiedenen sich ineinanderfügenden Elementen verbinden.

11. Vorrichtung nach Anspruch 1, **dadurch gekennzeichnet, dass** der axiale Abstand zwischen den Verbindungsplatten bei allen Verbindern der gleiche ist.

12. Vorrichtung nach Anspruch 1, 2 und 7, **dadurch gekennzeichnet, dass** der zwischen zwei Paaren von axial oder lotrecht montierten Platten eingehaltene Abstand ebenfalls den Zwischenplattenabstand des Elements einhält.

13. Vorrichtung nach Anspruch 7, **dadurch gekennzeichnet, dass** das Gehäuse des Verbinders mit Quermotorisierung (300) aus zwei gleichen Halbschalen (350 und 360) besteht.

14. Vorrichtung nach Anspruch 2, **dadurch gekennzeichnet, dass** das Gehäuse des Verbinders mit axialer Motorisierung eine Einrichtung zur Übertragung der Drehbewegung anbietet, die axial von mindestens einer der Platten mündet.

15. Vorrichtung nach Anspruch 1, **dadurch gekennzeichnet, dass** jedes Gehäuse eine elektronische Karte mit Mikrocontroller enthält, die den Motor regelt.

16. Vorrichtung nach den Ansprüchen 9 und 10, **dadurch gekennzeichnet, dass** in dem zylindrischen Körper der Elemente eine Vielzahl von Öffnungen (210) lotrecht zur Achse des Verbinders ausgebildet ist, in die einer oder mehrere Stifte (700) eingeführt werden, um die von einem axialen Adapter erzeugte axiale Verbindung in Position zu halten.

17. Vorrichtung nach Anspruch 16, **dadurch gekennzeichnet, dass** der Stift (700) eine zylindrische Ausbuchtung lotrecht zur Achse des Verbinders bildet und mit den radialen Vorsprüngen (410) zusammenwirkt, mit denen der Adapter (400) vorgeformt wird, um einen axialen mechanischen Anschlag zu erzeugen.

18. Vorrichtung nach Anspruch 10, **dadurch gekennzeichnet, dass** im Rahmen einer orthogonalen Montage ein Positionsbeibehaltungsclip (800) einerseits von einer vorstehenden Form (810), die sich der Kurve einer in der Platte eines der Elemente vorgeformten Nut anpasst, dessen Positionsbeibehaltung er gewährleistet, und andererseits von einer zylindrischen Ausbuchtung (820) vorgeformt wird, die einen Stift bildet, der in eine der Öffnungen eindringt, mit denen der zylindrische Körper des zweiten Elements lotrecht zu seiner Achse vorgeformt ist, dessen Positionsbeibehaltung er gewährleistet.

19. Vorrichtung nach Anspruch 10, **dadurch gekennzeichnet, dass** die Positionsbeibehaltungseinrichtung aus einem Clip besteht, der vorgeformt ist, um mit Einschnitten (220) zusammenzuwirken, die in gleichmäßigen Winkelabständen am Umfang der Platten oder in den radialen ringförmigen Vorsprüngen ausgebildet sind.

20. Vorrichtung nach den Ansprüchen 18 und 19, **dadurch gekennzeichnet, dass** die von der vorgeformten ringförmigen Nut in der Platte definierte Aussparung und diejenige, die von den Einschnitten definiert wird, miteinander in Verbindung stehen, um die Anwendung der Clips zu vereinfachen.
